(19) **Europäisches Patentamt / European Patent Office / Office européen des brevets**

(11) **EP 2 740 597 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(51) Int Cl.:
*B32B 27/08* (2006.01)  *B32B 27/36* (2006.01)
*B32B 27/20* (2006.01)  *B32B 27/16* (2006.01)
*C08K 3/22* (2006.01)
*C08K 5/3492* (2006.01)

(21) Anmeldenummer: **12196377.1**

(22) Anmeldetag: **10.12.2012**

(54) **Weiße, biaxial orientierte, mindestens einseitig matte und bewitterungsstabile Polyesterfolie, Verfahren zu ihrer Herstellung und ihre Verwendung**

White, biaxially oriented polyester film, matt on at least one side and weatherproof, method for its manufacture, and its use

Feuille de polyester blanche, orientée de manière biaxiale, mate sur un côté au moins et stable aux intempéries, son procédé de fabrication et son utilisation

(84) Benannte Vertragsstaaten:
**AT CH DE FR GB IT LI LU**

(43) Veröffentlichungstag der Anmeldung:
**11.06.2014 Patentblatt 2014/24**

(73) Patentinhaber: **Mitsubishi Polyester Film GmbH**
**65203 Wiesbaden (DE)**

(72) Erfinder:
• **Jesberger, Martin**
**55126 Mainz (DE)**
• **Kliesch, Holger**
**65462 Ginsheim-Gustavsburg (DE)**

• **Kuhmann, Bodo**
**65594 Runkel (DE)**
• **Altenhofen, Deborah**
**55118 Mainz (DE)**
• **Rücker, Harald**
**65529 Waldems (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
**EP-A1- 1 900 515**

**Beschreibung**

Die Erfindung betrifft eine weiße, mindestens einseitig matte, bewitterungsstabile, coextrudierte, biaxial orientierte Polyesterfolie, bestehend aus einer UV-stabilen weißen Basisschicht (B), die neben dem Weißpigment auch Mattigkeit erzeugende Partikel enthält, und mindestens einer auf dieser weißen matten Basisschicht (B) aufgebrachten weiß-matten UV-stabilen Deckschicht (A), die ebenfalls Mattigkeit erzeugende Partikel enthält. Die Folie zeichnet sich durch eine charakteristische matte Oberfläche der Deckschicht (A) aus, wobei diese optische Eigenschaft auch nach längerer Bewitterung erhalten bleibt. Die erfindungsgemäße Folie kann darüber hinaus mindestens eine durch Beschichtung funktionalisierte Oberfläche aufweisen, wodurch z. B. eine gute Haftung gegenüber Polymer- oder Metall-Schichten oder Druckfarben erzielt wird. Die Erfindung betrifft weiterhin ein Verfahren zur Herstellung der Folie und ihre Verwendung.

**Stand der Technik**

In der US-PS 3,154,461 wird eine biaxial orientierte Folie aus thermoplastischem Kunststoff (z. B. Polyethylenterephthalat, Polypropylen) mit matter Oberfläche beschrieben, die inkompressible Partikel (z. B. Calciumcarbonat, Siliciumdioxid) in einer Größe von 0,3 bis 20 $\mu$m und in einer Konzentration von 1 bis 25 Gew.-% enthält. Für weiße Anwendungen ist diese Folie zu transparent und der Weißgrad zu gering. Die matte Optik hält einer längeren Bewitterung nicht stand.

In EP 1 900 515 A1 wird eine weiße, einseitig matte, coextrudierte, biaxial orientierte Polyesterfolie beschrieben, bestehend aus einer weißen Basisschicht (B) und mindestens einer auf dieser weißen Basisschicht (B) aufgebrachten matten Deckschicht (A). Die Folie zeigt anfänglich einen akzeptablen Mattgrad, verändert jedoch bei längerer Sonneneinstrahlung ihre Optik; sie erhöht über die Zeit ihren Glanz und streut dadurch das Licht weniger diffus als ursprünglich. Im Einsatz in Gebäudeverkleidungen besteht die Gefahr, dass durch den zunehmenden Glanz der Flugverkehr gestört wird.

Aufgabe der vorliegenden Erfindung war es, eine weiße, mindestens einseitig matte, biaxial orientierte Polyesterfolie bereitzustellen, die die Nachteile der Folien aus dem Stand der Technik - insbesondere der Folien gemäß EP 1 900 515 A1 - nicht aufweist und sich insbesondere durch einen hohen Mattgrad - auch nach permanenter Sonneneinstrahlung über 10 Jahre - bei gleichzeitig niedriger Transparenz und hohem Weißgrad, sehr gute Herstellbarkeit und eine sehr gute Verarbeitbarkeit auszeichnet. Bei der Herstellung der Folie sollte weiterhin gewährleistet sein, dass anfallendes Verschnittmaterial als Regenerat wieder dem Herstellprozess zurückgeführt werden kann, ohne dass dabei die physikalischen und optischen Eigenschaften der Folie nennenswert negativ beeinflusst werden.

Hierbei bedeutet

- hoher Mattgrad: Glanz < 50, bevorzugt < 45, besonders bevorzugt < 40 (bei 60° nach DIN 67 530)
- niedrige Transparenz: < 60 %, bevorzugt < 50 %, besonders bevorzugt < 40 %; nach ASTM D 1003-61
- hoher Weißgrad: > 75, bevorzugt > 80, besonders bevorzugt > 85; nach Berger (s. Methodenbeschreibung unten)
- Bewitterungsstabilität: der Unterschied im Mattgrad vor/nach Bewitterung beträgt maximal 20 Einheiten, bevorzugt maximal 10 Einheiten und ganz besonders bevorzugt maximal 5 Einheiten
- sehr gute Herstellbarkeit: weniger als 2 Abrisse in der Produktion pro 24 Stunden
- sehr gute Verarbeitbarkeit: gute Wickelbarkeit, d. h. kein Teleskopieren (< 1 cm pro Wickellage)
- ausgezeichnete physikalische Eigenschaften: ein E-Modul (längs) von 3200 bis 5400 N/mm$^2$, E-Modul (quer) von 3900 bis 6800 N/mm$^2$ (gemessen nach ISO 527-1 und ISO 527-3 Probekörper Typ2) und/oder eine Zugfestigkeit (längs) von 120 bis 260 N/mm$^2$, Zugfestigkeit (quer) von 120 bis 320 N/mm$^2$ (gemessen nach ISO 527-1 und ISO 527-3 Probekörper Typ2)
- ausgezeichnete optische Eigenschaften: s. o.: Mattgrad, Transparenz und Weißgrad

Gelöst wird die Aufgabe durch eine weiße, biaxial orientierte Polyesterfolie nach Anspruch 1.

Alle Gewichtsprozentangaben beziehen sich auf die Masse der Schicht, für die diese Angabe gemacht wird, sofern nichts anderes gesagt ist.

Gegebenenfalls trägt zumindest eine der beiden Folienoberflächen eine funktionsvermittelnde Beschichtung, oder sie ist funktionsvermittelnd behandelt. "Funktionsvermittelnd" bedeutet hierbei, dass der Folie eine weitere, üblicherweise nicht vorhandene oder nur gering ausgeprägte Eigenschaft vermittelt wird; beispielsweise wird die Folie dadurch siegelfähig, bedruckbar, metallisierbar, sterilisierbar, antistatisch, oder sie weist z. B. eine verbesserte Aromabarriere auf oder ermöglicht die Haftung zu Materialien, die ansonsten nicht auf der Folienoberfläche haften würden. Diese Beschichtung wird bevorzugt als wässrige Dispersion auf die Folie aufgebracht. In einer bevorzugten Ausführung wird eine funktionsvermittelnde Acrylatbeschichtung auf die matte Deckschicht (A) aufgetragen.

Erfindungsgemäß ist die Folie zumindest zweischichtig und umfasst dann als Schichten die matt-weiße Basisschicht (B) und die matt-weiße Deckschicht (A). In einer bevorzugten Ausführungsform der Erfindung ist die Folie dreischichtig aufgebaut und weist dann auf der einen Seite der Basisschicht (B) die erfindungsgemäße Deckschicht (A) und auf der anderen Seite der Basisschicht (B) eine weitere Deckschicht (C) auf. Auch diese erfindungsgemäße dreischichtige Folie weist gegebenenfalls auf zumindest einer Folienoberfläche eine funktionsvermittelnde Beschichtung auf, die bevorzugt als wässrige Dispersion auf die Folie aufgebracht wird.

Der Anteil der Basisschicht (B) an der Gesamtdicke der Folie beträgt mindestens 50 %, bevorzugt mindestens 60 % und besonders bevorzugt mindestens 70 %.

## Basisschicht (B)

Der Polymeranteil der Basisschicht (B) der Folie besteht bevorzugt zu mindestens 80 Gew.-% aus thermoplastischem Polyester, bevorzugt zu mindestens 90 Gew.-%. Diese Gewichtsprozentangaben beziehen sich - wie gesagt - auf den Polymeranteil der Schicht; Pigment-, Partikel- oder Additivanteile sind dabei nicht berücksichtigt. Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB).

Bevorzugt sind Polyester, die zu mindestens 90 Mol-%, insbesondere zu mindestens 95 Mol-%, aus von Ethylenglykol und Terephthalsäure abgeleiteten Einheiten oder aus von Ethylenglykol und Naphthalin-2,6-dicarbonsäure abgeleiteten Einheiten bestehen (die 100 Mol-%-Basis bildet hierbei der Polyester bzw. Copolyester). Die restlichen Einheiten sind von anderen aliphatischen, cycloaliphatischen oder aromatischen Diolen bzw. Dicarbonsäuren abgeleitet, wie sie der Fachmann üblicherweise für die Herstellung von Copolyestern verwendet.

In einer ganz bevorzugten Ausführungsform besteht die Basisschicht aus Polyethylenterephthalat-Homopolymer.

Solche Polyester können kommerziell erworben werden oder - sofern erforderlich - nach dem Fachmann bekannten Verfahren hergestellt werden, beispielsweise durch Copolymerisation der einzelnen Monomere oder über Masterbatche verschiedener Einzelpolymere.

Die Basisschicht (B) enthält neben dem oben beschriebenen Polymer ein Weißpigment in einer Konzentration von 3 bis 15 Gew.-%, bevorzugt von 4 bis 14 Gew.-% und besonders bevorzugt von 5 bis 13 Gew.-%. Detailangaben zu dem Weißpigment folgen weiter unten im Abschnitt "Weißpigment".

Darüber hinaus enthält die Basisschicht (B) Partikel in einer Konzentration von 1 bis 7 Gew.-%, wobei diese Partikel von den Weißpigmenten verschiedene Partikel sind. Die zusätzlichen Partikel in der Basisschicht sind zumindest chemisch identisch mit den Partikeln in der Deckschicht (A) und haben erfindungsgemäß die Aufgabe, die Optik, d. h. den Mattgrad der äußeren Schicht nach längerer Bewitterung zu stabilisieren. Diese Einarbeitung der zusätzlichen Partikel ist notwendig, da ansonsten der Glanz der Folie mit der (Anwendungs-)Zeit zunimmt (durch UV-Erosion der Deckschicht), was für die Anwendung unerwünscht ist. Detailangaben zu den von den Weißpigmenten verschiedenen zusätzlichen Partikeln folgen weiter unten im Abschnitt "andere Partikel".

Weiterhin ist es zweckmäßig, wenn die Basisschicht (B) einen UV-Stabilisator in einer Konzentration von 0,1 bis 5,0 Gew.-%, bevorzugt 0,2 bis 4,5 Gew.-% und besonders bevorzugt 0,3 bis 4,0 Gew.-%. (bezogen auf das Gesamtgewicht der Basisschicht (B)) enthält. Detailangaben zu dem UV-Stabilisator folgen weiter unten im Abschnitt "UV-Stabilisator".

Die Basisschicht (B) kann ebenfalls zusätzlich weitere, von UV-Stabilisatoren verschiedene Stabilisatoren enthalten, beispielsweise Phosphorverbindungen wie Phosphorsäure oder Phosphorsäureester.

## Deckschicht (A)

Die durch Coextrusion auf die Basisschicht (B) aufgebrachte matt-weiße Deckschicht (A) ist, ebenso wie die Basisschicht (B), überwiegend (d. h. zu mindesten 50 Gew.-%) auf Basis eines thermoplastischen Polyesters aufgebaut, bevorzugt zu mindestens 80 Gew.-%, besonders bevorzugt zu mindestens 90 Gew.-%. Zweckmäßigerweise handelt es sich um den gleichen Polyester, der auch für die Basisschicht (B) eingesetzt wird, gegebenenfalls mit der Variation, dass zur Verbesserung der Folienherstellbarkeit der Polyester 4 bis 30 Mol-%, bevorzugt 6 bis 25 Mol-%, besonders bevorzugt 8 bis 16 Mol-%, von Isophthalsäure (IPA) abgeleitete Einheiten enthält, wobei diese Molprozentangaben auf die Gesamtheit (=100 Mol-%) der Dicarbonsäure abgeleiteten Einheiten des Polyesters in dieser Schicht bezogen sind.

In einer bevorzugten Ausführungsform der Erfindung ist der Polyester der Deckschicht (A) ein Copolyester, der aus Terephthalsäure- und Isophthalsäure-abgeleiteten Einheiten und aus Ethylenglykol-abgeleiteten Einheiten aufgebaut ist. Der Anteil an Terephthalsäure-abgeleiteten Einheiten in diesem Copolyester, bezogen auf die Gesamtheit (=100 Mol-%) der Dicarbonsäure-abgeleiteten Einheiten des Polyesters, beträgt bevorzugt 70 bis 96 Mol-% und der entsprechende Anteil an Isophthalsäure-abgeleiteten Einheiten 30 bis 4 Mol-%. Besonders bevorzugt sind hierunter solche Copolyester, bei denen der Anteil an Terephthalsäure-abgeleiteten Einheiten 72 bis 94 Mol-% und der entsprechende Anteil an Isophthalsäure-abgeleiteten Einheiten 6 bis 25 Mol-% beträgt. Ganz bevorzugt sind solche Copolyester, bei denen der Anteil an Terephthalsäure-abgeleiteten Einheiten 74 bis 92 Mol-% und der entsprechende Anteil an Isophthalsäure-abgeleiteten Einheiten 6 bis 16 Mol-% beträgt.

Mit zunehmendem IPA-Anteil sinkt die Anzahl der Abrisse in der Folienproduktion deutlich. Oberhalb von 16 Mol-% IPA-abgeleiteter Einheiten sinkt jedoch andererseits die UV-Beständigkeit der Folie messbar ab und wird oberhalb von 30 Mol-% sehr schlecht. Überraschend ist außerdem, dass mit zunehmendem IPA-Anteil der Glanz der Oberfläche der Deckschicht (A) sinkt, dass man also bei Verwendung von Isophthalsäure in der angegebenen Konzentration für die Deckschicht (A) eine Folie mit besonders niedrigem Glanz erhält.

Die Polyesterrohstoffe für die Deckschicht (A) sind ebenfalls kommerziell erhältlich oder lassen sich nach dem Fachmann bekannten Verfahren über Copolymerisation der einzelnen Monomere oder über Masterbatche verschiedener Einzelpolymere als Mischung bzw. als Blend herstellen.

Im Übrigen gilt das oben für den Polymeraufbau der Basisschicht (B) bereits gesagte.

Die matt-weiße Deckschicht (A) enthält ein Weißpigment in einer Konzentration von 2 bis 15 Gew.-%, bevorzugt von 3 bis 14 Gew.-% und besonders bevorzugt von 4 bis 13 Gew.-%. Je höher der Anteil an Weißpigment in der Deckschicht (A), desto höher der Weißgrad der Folie und desto höher ist die UV-Stabilität. Oberhalb der erfindungsgemäßen Konzentrationsgrenzen beeinflusst das Weißpigment jedoch die Laufsicherheit der Folie deutlich negativ. Detailangaben zu dem Weißpigment folgen weiter unten im Abschnitt "Weißpigment".

Darüber hinaus enthält die Deckschicht (A) Partikel in einer Konzentration von 1,0 bis 7,0 Gew.-% (bezogen auf das Gesamtgewicht dieser Schicht), wobei diese Partikel von Weißpigmenten verschiedene Partikel sind. Bevorzugt beträgt die Konzentration dieser anderen Partikel 1,5 bis 6,5 Gew.-% und besonders bevorzugt 2,0 bis 6,0 Gew.-%. Diese Partikel erzeugen den für die erfindungsgemäße Anwendung erwünschten Mattgrad. Enthält die Deckschicht (A) der Folie dagegen diese anderen Partikel in einer Konzentration von weniger als 1,0 Gew.-%, so ist der Mattgrad (= Mattigkeit) nicht ausreichend, das heißt, der Glanz ist zu hoch ($\geq$ 50 bei 60°; nach DIN 67 530). Enthält dagegen die Deckschicht (A) der Folie die anderen Partikel in einer Konzentration von mehr als 7,0 Gew.-%, so wird die homogene Einarbeitung der Partikel in die Folie erschwert, was zu unerwünschten Inhomogenitäten (bedingt durch Agglomerate) in der Oberfläche führt. Detailangaben zu den von den Weißpigmenten verschiedenen zusätzlichen Partikeln folgen weiter unten im Abschnitt "andere Partikel".

Erfindungsgemäß enthält auch die Deckschicht (A) einen UV-Stabilisator in einer Konzentration von 0,3 bis 8,0 Gew.-%, bevorzugt 0,5 bis 3,0 Gew.-% und besonders bevorzugt 1,0 bis 2,0 Gew.-%. Bei der Verwendung von weniger als 0,3 Gew.-% wird die Folie brüchig, was unerwünscht ist. Bei Verwendung eines UV-Stabilisators in Mengen über 8,0 Gew.-% wird, bedingt durch das niedrige Molekulargewicht des UV-Stabilisators, die intrinsische Viskosität der Folie zu niedrig, was sich negativ auf die Laufsicherheit der Folie auswirkt. Detailangaben zu dem UV-Stabilisator folgen weiter unten im Abschnitt "UV-Stabilisator".

## Weißpigment

Zur Erzielung der vorgenannten Eigenschaften, insbesondere des gewünschten Weißgrades der Folie, werden in die Basisschicht (B) und zumindest in eine Deckschicht (A), eventuell aber auch in gegebenenfalls vorhandene weitere Schichten, Weißpigmente eingearbeitet. Die folgenden Aussagen gelten für alle Schichten, in denen Weißpigmente eingesetzt werden gleichermaßen, wobei natürlich innerhalb der unten angegebenen Grenzen die Typen, Eigenschaften und Konzentrationen der Weißpigmente in den betroffenen Schichten gleich oder unabhängig voneinander verschieden sind.

Als Weißpigmente in Frage kommen z. B. Titandioxid, Bariumsulfat, Zinksulfid oder Zinkoxid. Bevorzugt wird $TiO_2$ als alleiniges weißfärbendes Pigment verwendet, da $TiO_2$ bereits bei geringerer Konzentration (ca. Faktor 2) als $BaSO_4$, ZnS oder ZnO zu der gewünschten Weißfärbung führt und dadurch die Wirtschaftlichkeit verbessert und die Anzahl der Abrisse bei der Herstellung reduziert. Das Titandioxid kann sowohl vom Rutil-Typ als auch vom Anatas-Typ oder eine Mischung aus Rutil- und Anatas-Typ sein. Vorzugsweise wird Titandioxid vom Rutil-Typ verwendet. Bei Verwendung von Rutil-$TiO_2$ werden bereits bei geringerer Konzentration (als bei anderen Weißpigmenten) hohe Weißgrade erzielt. Der Zusatz von $TiO_2$ ist dann besonders bevorzugt, wenn das $TiO_2$ anorganisch beschichtet/dotiert und optional zusätzlich organisch beschichtet ist. Die bevorzugten anorganischen Beschichtungen bzw. Zuschlagstoffe zum $TiO_2$ sind dabei $SiO_2$, bevorzugt $Al_2O_3$ und besonders bevorzugt Kombinationen aus $SiO_2$ und $Al_2O_3$. Der Anteil an $SiO_2$ und $Al_2O_3$ liegt bevorzugt bei > 0,7 Gew.-% (bezogen auf das $TiO_2$), besonders bevorzugt bei > 1,0 Gew.-% und ganz besonders bevorzugt bei > 1,5 Gew.-%. Ein Maximum von 10 Gew.-% sollte jedoch nicht überschritten werden. Die anorganischen Beschichtungskomponenten in den angegebenen Gewichtsanteilen sind für die UV-Stabilität der erfindungsgemäßen Folien besonders günstig, da hierdurch die photosensibilisierende Wirkung des $TiO_2$ reduziert bzw. ganz unterbunden wird, was eine Verlangsamung der UV-Alterung der Folie bewirkt und somit einen UV-Schutz bietet. Einerseits reduziert die anorganische Beschichtung die katalytisch wirksame Oberfläche des $TiO_2$, die zu einer Vergilbung und Versprödung der Folie führen kann, andererseits wirkt sich eine organische Beschichtung positiv auf die Einarbeitung

des TiO$_2$ in den thermoplastischen Polyester aus (homogenere Verteilung, keine Agglomerate/Gele). Geeignete TiO$_2$-Typen sind kommerziell erhältlich. Beispielhaft seien R-105 und R104 von DuPont (USA) und Rodi® von Sachtleben (Deutschland) genannt.

Das Weißpigment kann direkt im Herstellprozess der Folie, beispielsweise in den Extruder, zugegeben werden, wird jedoch in einer bevorzugten Ausführungsform der Erfindung als Extrusionsmasterbatch dem additivlosen Polyester ("Originalrohstoff", Klarrohstoff") zugegeben. Typische Konzentrationsbereiche für das Weißpigment (wie oben definiert) im Extrusionsmasterbatch sind 20 bis 70 Gew.-%.

Die d$_{50}$-Korngröße des Weißpigments, insbesondere des Titandioxids, liegt zweckmäßigerweise zwischen 0,05 und 0,5 μm, bevorzugt zwischen 0,15 und 0,35 μm.

Die Folie erhält durch die eingearbeiteten Weißpigmente in den vorgesehenen Konzentrationen ein brillantes weißes Aussehen.

**Andere Partikel**

Zur Erzielung der gewünschten Mattheit (= gewünschter Mattgrad) enthält die weiße Deckschicht (A) neben dem Weißpigment zusätzlich von den Weißpigmenten verschiedehe Partikel. Diese zusätzlichen Partikel sind ebenfalls in der Basisschicht (B) vorhanden. Überraschenderweise sorgen sie hier für den Erhalt des Mattgrades über längere Bewitterungszeiten (Bewitterungsstabilität der Folie).

Typische, den Mattgrad der Folie begünstigende und damit bevorzugte Partikel sind anorganische und/oder organische Partikel, beispielsweise Calciumcarbonat, Kieselsäure (SiO$_2$), insbesondere amorphe Kieselsäure, Talk, Magnesiumcarbonat, Bariumcarbonat, Calciumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Kaolin oder vernetzte Polymerpartikeln, z. B. Polystyrol- oder Acrylat-Partikel.

Daneben können auch Mischungen von zwei oder mehreren verschiedenen dieser Partikel oder Mischungen von Partikeln mit gleicher chemischer Zusammensetzung, aber unterschiedlicher Partikelgröße gewählt werden. Die Partikel können den Polymeren der einzelnen Schichten der Folie in den jeweils vorteilhaften Konzentrationen, z. B. als glykolische Dispersion während der Polykondensation bei der Herstellung der Polyester oder über Masterbatche bei der Extrusion, zugegeben werden.

Bevorzugte "andere Partikel" sind synthetisch hergestellte SiO$_2$-Partikel, insbesondere amorphe Kieselsäure. Diese Partikel werden sehr gut in die Polymermatrix eingebunden. Hersteller solcher Partikel sind z. B. die Firmen Grace (US), Fuji (JP), Evonik (DE) oder Ineos (GB).

Es hat sich als besonders vorteilhaft erwiesen, Partikel mit einem mittleren Partikeldurchmesser d$_{50}$ von 2,0 bis 10,0 μm, besonders bevorzugt von 2,4 bis 8,0 μm und ganz besonders bevorzugt von 2,6 bis 7,0 μm, zu verwenden. Bei der Verwendung von Partikeln mit einem Durchmesser, der unterhalb von 2,0 μm liegt, ist die Mattheit der Folie zu niedrig und damit der Glanz zu hoch. Teilchen mit einem Durchmesser von größer als 10 μm verursachen in der Regel Filterprobleme.

**UV-Stabilisator**

Eine Auswahl geeigneter UV-Stabilisatoren findet sich in FR 2 812 299. Besonders bevorzugt sind UV-Stabilisatoren die als UV-Absorber wirken, insbesondere solche auf Triazinbasis, da insbesondere diese eine hohe Langzeitstabilität (gefordert sind im Baubereich meist mehr als 10 Jahre) aufweisen. Besonders geeignet sind dabei neben Tinuvin® 1577 die in DE 10 2006 059 888 (A1) als bevorzugt beschriebenen Triazinderivate.

Die UV-Stabilisatoren bewirken neben einer Verringerung der Versprödung (Mechanikverlust) zudem eine geringere bzw. langsamere Dickenerosion (= Reduzierung der Folienschichtdicke durch Bewitterung).

**Die Folie**

Der gewünschte Weißgrad (> 75, bevorzugt > 80, besonders bevorzugt >85) und die gewünschte niedrige Transparenz (< 60 %, bevorzugt < 50 %, besonders bevorzugt < 40 %) der Folie wird in erster Linie durch das Weißpigment in den angegebenen Konzentrationen, insbesondere in der Basisschicht, erreicht.

Liegt die Konzentration des Weißpigments in der Folie insgesamt und insbesondere in der Basisschicht unter den oben angegebenen Werten, so liegt der Weißgrad unterhalb von 75, und die Folie erscheint dem Beobachter nicht weiß genug. Ebenso liegt dann die Transparenz über 60 %, und die Folie erscheint milchig; das unter der Folie liegende Konstrukt ist dann zu erkennen. Die Durchlässigkeit von Licht hat einen bedeutenden Einfluss auf die Aufheizung eines Gebäudes. Weniger lichtdurchlässige Folien führen zu einer geringeren Aufheizung. Mit solchen lichtundurchlässigen Folien lassen sich dann ökonomisch und ökologisch interessante Konstrukte im Baugewerbe realisieren. Insbesondere in südlichen Regionen, in heißen Gebieten in der Nähe des Äquators, werden große Energiemengen, insbesondere in den Sommermonaten, benötigt, um Klimaanlagen zu betreiben. Reflektierende Folienbahnen führen zu einer geringeren Wärmeleitung und damit zu einer geringeren Aufheizung von Gebäuden. Dadurch können erhebliche Mengen an Energie eingespart werden. Bevorzugt liegt daher die Transparenz der erfindungsgemäßen Folien unter 60 %, besonders bevorzugt unter 50 % und ganz besonders bevorzugt unter 40 %.

Zu einer weiteren Steigerung des Weißgrades können in einer bevorzugten Ausführungsform der Erfindung optische Aufheller der Basisschicht und/oder den anderen Schichten der Folie zugesetzt werden. Geeignete optische Aufheller sind beispielsweise Hostalux® KS der Firma Clariant oder Eastobrite® OB-1 der Firma Eastman.

Wie bereits erwähnt werden die erfindungsgemäßen hohe Weißgrade und die niedrige Transparenz der Folie erreicht, wenn die erfindungsgemäßen Mengen an Weißpigment in Basis- und Deckschicht eingesetzt werden. Diese Grenzen sind allgemein gültig. Es wurde weiterhin gefunden, dass die Gesamtweißpigmentmenge in der Folie unter Beachtung der Individualgrenzen für die einzelnen Schichten in Abhängigkeit der Gesamtfoliendicke variiert werden kann. In einer bevorzugten Ausführungsform folgt die Gesamtweißpigmentmenge (in Gew.-%, bezogen auf die Masse der Gesamtfolie) der Folie der folgenden Formel in Abhängigkeit von der Gesamtfoliendicke:

$$\text{Gesamtweißpigmentmenge [Gew.-\%]} = a \cdot x^2 - b \cdot x + c$$

wobei

x  die Gesamtfoliendicke in $\mu$m,
a  0,001-0,002 [Gew.-%·$\mu$m$^2$], bevorzugt 0,0013-0,0017 [Gew.-%·$\mu$m$^{-2}$], besonders bevorzugt 0,0014-0,0016 [Gew.-%·$\mu$m$^{-2}$],
b  0,25-0,37 [Gew.-%·$\mu$m$^{-1}$], bevorzugt 0,27-0,35 [Gew.-%·$\mu$m$^{-1}$] und besonders bevorzugt 0,30-0,32 [Gew.-%·$\mu$m$^{-1}$], und
c  15-22 [Gew.-%], bevorzugt 17-21 [Gew.-%], besonders bevorzugt 18-20 [Gew.-%]

sind.

Die mengenmäßige Ober- und Untergrenzen für das Weißpigment sind dabei pro Schicht - wie oben bereits gesagt - einzuhalten. Eine Gesamtweißpigmentmenge innerhalb der durch die Formel gesetzten Grenzen garantiert den erfindungsgemäßen Weißgrad und die erfindungsgemäß niedrige Transparenz bei variierenden Foliendicken.

Die Dickenerosion (= Abbau der Foliendicke durch Witterungseinflüsse) der erfindungsgemäßen Folie liegt nach 5000 h Bewitterung unter 5 $\mu$m Dickenverlust, bevorzugt unter 2,5 $\mu$m Dickenverlust und besonders bevorzugt unter 1,5 $\mu$m Dickenverlust. Durch diese Reduktion des Dickenverlustes über die Zeit gegenüber Folien nach dem Stand der Technik wird einer Erhöhung des Glanzes der Folie über die Zeit vorgebeugt.

Die erfindungsgemäße Folie weist zumindest die Basisschicht (B) und die Deckschicht (A) auf. In einer bevorzugten Form besteht die Folie aus drei Schichten: der Basisschicht (B) und beidseitig auf dieser Basisschicht (B) aufgebrachten Deckschichten (A) und (C), wobei die Deckschichten (A) und (C) gleich oder verschieden sein können. Der Aufbau der Deckschicht (A) wurde bereits ausführlich beschrieben. Die Deckschicht (C) enthält bevorzugt die für die Basisschicht (B) beschriebenen Polyester. Insbesondere enthält die Deckschicht (C) bevorzugt die oben genannten "anderen Partikel", um das Verarbeitungsverhalten der Folie weiter zu verbessern.

Zwischen der Basisschicht (B) und den Deckschichten (A) und gegebenenfalls (C) können sich gegebenenfalls noch eine oder mehrere Zwischenschichten befinden. Diese können wiederum aus den für die Basisschicht (B) beschriebenen Polyestern bestehen. Die Zwischenschicht kann auch die beschriebenen üblichen Weißpigmente, anderen Partikel und Additive enthalten. Die Dicke der Zwischenschicht ist im allgemeinen größer als 0,3 $\mu$m und liegt vorzugsweise im Bereich von 0,5 bis 15 $\mu$m, insbesondere im Bereich von 1,0 bis 10 $\mu$m, besonders bevorzugt im Bereich von 1,0 bis 5 $\mu$m.

Die jeweilige Dicke der Deckschichten (A) und (C) liegt im Allgemeinen im Bereich von 2,0 bis 15,0 $\mu$m, bevorzugt im Bereich von 3,0 bis 8,0 $\mu$m und besonders bevorzugt im Bereich von 3,5 bis 5,0 $\mu$m, wobei die matte Deckschicht (A) und die Deckschicht (C) gleich oder verschieden dick sein können.

Die Gesamtdicke der erfindungsgemäßen Polyesterfolie kann innerhalb weiter Grenzen variieren. Sie liegt in der Regel im Bereich von 15 bis 100 $\mu$m, insbesondere von 16 bis 40 $\mu$m, vorzugsweise von 19 bis 38 $\mu$m.

Der Anteil der Basisschicht (B) an der Gesamtdicke der Folie beträgt mindestens 50 %, bevorzugt mindestens 60 % und besonders bevorzugt mindestens 70 %.

Je dünner die Folie, desto schwieriger ist das Erreichen ausreichender Weißgrade, niedriger Transparenzen und niedriger Glanzwerte bei einer wirtschaftlich vertretbaren Herstellbarkeit /Laufsicherheit. Unterhalb von 15 $\mu$m Gesamtfoliendicke ist dies nicht mehr erreichbar. Zudem sinkt die UV-Beständigkeit mit der Foliendicke.

Je größer die Gesamtdicke, desto größer wird das Flächengewicht. Damit sinkt die Möglichkeit eines wirtschaftlich sinnvollen Einsatzes; gefertigte Endprodukte werden zu schwer und die abnehmende mechanische Flexibilität macht ihre Weiterverarbeitung in den bevorzugten Bauanwendungen schwierig.

Zusammengefasst zeichnet sich die erfindungsgemäße Folie insbesondere durch einen witterungsstabilen niedrigen Glanz der Folienoberfläche (A), durch eine vergleichsweise hohe UV-Beständigkeit und eine niedrige Transparenz aus. Außerdem besitzt sie ein gutes Wickel- und Verarbeitungsverhalten.

Die erfindungsgemäße Folie eignet sich als Außenschicht für verschiedene Baukonstrukte im Außenbereich. Das Sonnenlicht wird reflektiert und wird, bedingt durch die matt-weiße Deckschicht, diffus gestreut. Eine Behinderung des Flugverkehrs wird vermieden, und die Aufwärmung von Gebäuden wird reduziert, was zu enormen Energieeinsparungen führt. Die Ausstattung der Basisschicht mit sowohl Weißpigmenten als auch Mattpartikeln verhindert ein witterungsbedingtes Ansteigen des Glanzes der matten Außenschicht.

Der Glanz der Folienoberfläche (A), gemessen bei einem Einfallswinkel von 60°, ist niedriger als 50. In einer bevorzugten Ausführungsform beträgt der Glanz dieser Seite weniger als 45 und in einer besonders bevorzugten Ausführungsform weniger als 40. Der Glanz der Folienoberfläche (A), gemessen bei einem Einfallswinkel von 60°, ist nach einem 90-tägigen Bewitterungstest immer noch niedriger als 60 und in einer bevorzugten Ausführungsform niedriger als 45 und in einer besonderen Ausführungsform niedriger als 40. Die Differenz des Glanzes vor und nach dem 90-tägigen Bewitterungstest beträgt, gemessen bei einem Einfallswinkel von 60°, maximal 20 Einheiten, bevorzugt maximal 10 Einheiten und besonders bevorzugt maximal 5 Einheiten.

Der Weißgrad der Folie (nach Berger) ist größer als 75, bevorzugt größer als 80 und besonders bevorzugt größer als 85. Die Transparenz der Folie ist < 60 %, bevorzugt < 50 %, besonders bevorzugt < 40 %.

## Funktionale Beschichtung

Mindestens eine Folienoberfläche der erfindungsgemäßen Folie kann funktionsvermittelnd beschichtet und/oder behandelt sein.

Durch eine Corona- oder Flammbehandlung, die sich üblicherweise an die Thermofixierung (s. u.: Verfahren zur Herstellung) anschließt, kann beispielsweise das Haftvermögen der Folienoberfläche verbessert werden.

Alternativ oder zusätzlich zu der Corona- oder Flammbehandlung kann die Folie auf einer oder beiden Oberfläche(n) mit einer bekannten funktionalen Beschichtung versehen werden, die der Folie Eigenschaften wie Antistatik, Leitfähigkeit, verbesserte Hafteigenschaften usw. verleihen, wobei die Beschichtung in getrocknetem Zustand eine Dicke von 5 bis 2000 nm, insbesondere 20 bis 500 nm und besonders bevorzugt 30 bis 200 nm, aufweist. Die Beschichtung wird bevorzugt "in-line" aufgebracht, d. h. während des Folienherstellprozesses, zweckmäßigerweise mittels des "Revers gravureroll coating"- Verfahrens oder "Meyer-Rod"-Verfahrens. Beispiele für Beschichtungen, die zusätzliche Funktionalitäten verleihen, sind z. B. Acrylate wie in EP-A-0 144 948 beschrieben oder Ethylenvinylalcohole, PVDC oder Copolyester wie beispielsweise beschrieben in EP-A-0 144 878, US-A-4,252,885 oder EP-A-0 296 620. Eine genauere Beschreibung der verschiedenen Schichten, deren Zusammensetzung und Verfahren zu deren Aufbringung kann den erwähnten Schriften entnommen werden, auf die hier ausdrücklich Bezug genommen wird.

## Verfahren zur Herstellung

Die Erfindung betrifft auch ein Verfahren zur Herstellung der erfindungsgemäßen Polyesterfolie nach dem aus der Literatur bekannten Coextrusionsverfahren.

Im Rahmen dieses Verfahrens wird so vorgegangen, dass die den einzelnen Schichten (A), (B), gegebenenfalls (C), (D) usw. der Folie entsprechenden Schmelzen durch eine Flachdüse coextrudiert und zu einem Schmelzefilm ausgeformt werden, die so erhaltene Folie zur Verfestigung auf einer oder mehreren Walze/n abgezogen wird, die Folie anschließend biaxial gestreckt (orientiert), gegebenenfalls vor oder während einer Streckung beschichtet, die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im Allgemeinen aufeinander folgend durchgeführt (sequentiell), wobei die aufeinander folgende biaxiale Streckung, bei der zuerst längs (in Maschinenrichtung) und dann quer (senkrecht zur Maschinenrichtung) gestreckt wird, bevorzugt ist.

Zunächst werden, wie beim Coextrusionsverfahren üblich, das Polymere bzw. die Polymermischungen für die einzelnen Schichten in je einem Extruder komprimiert und verflüssigt, wobei die gegebenenfalls als Zusätze vorgesehenen Additive bereits im Polymer bzw. in der Polymermischung enthalten sein können. Bevorzugt werden diese Additive in Form von Masterbatches dem Ausgangspolymer zugesetzt. Die Schmelzen werden dann gleichzeitig durch eine Flachdüse (Breitschlitzdüse) gepresst, und die ausgepresste, mehrschichtige Schmelze wird auf einer oder mehreren Abzugswalzen abgezogen, wobei die Schmelze abkühlt und sich zu einer Vorfolie verfestigt. Hierbei sind Düsen- und Schmelztemperaturen über 307 °C unbedingt zu vermeiden, da ansonsten die Gefahr besteht, dass der UV-Stabilisator ausgast. Bevorzugt liegt die Schmelzetemperatur unter 306 °C und idealerweise unter 295 °C.

Die biaxiale Streckung wird im allgemeinen sequentiell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in den die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 80 bis 150 °C durchgeführt. Das Längsstreckverhältnis liegt allgemein im Bereich von 2,5:1 bis 5:1, bevorzugt von 3:1 bis 4,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur von ca. 180 bis 250 °C gehalten. Anschließend wird die Folie in üblicher Weise aufgewickelt.

Die erfindungsgemäße Folie zeichnet sich insbesondere durch hervorragende optische Eigenschaften, d. h. einen niedrigen Glanz, hohe UV-Stabilität und niedrige Transparenz, ein sehr gutes Handling und durch ein sehr gutes Verarbeitungsverhalten aus.

Daneben ist bei der Herstellung der Folie gewährleistet, dass Verschnittmaterial, das bei der Herstellung der Folie in größeren Mengen anfällt, als Regenerat in einer Menge im Bereich von ca. 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild.

Die Folie eignet sich demnach ganz hervorragend für den Einsatz in verschiedenen Baukonstrukten in der Außenanwendung, insbesondere für Dachkonstruktionen. Die matt-weiße Außenschicht reflektiert das einstrahlende Sonnenlicht diffus. Ein Aufwärmen des darunter liegenden Gebäudes wird reduziert, und der Flugverkehr wird durch die diffuse Reflektion nicht gestört.

Die nachstehende Tabelle 1 fasst die wichtigsten erfindungsgemäßen und bevorzugten Folieneigenschaften noch einmal zusammen:

**Tabelle 1**

| Basisschicht B | | | | | |
|---|---|---|---|---|---|
| | bevorzugter Bereich | besonders bevorzugt | ganz besonders bevorzugt | Einheit | Messmethode |
| Konzentration an weißfärbendem Füllstoff | 3 bis 15 | 4 bis 14 | 5 bis 13 | Gew.-% | |
| Füllstoffkonzentration des zusätzlichen Partikels | 1,0 bis 7,0 | 1,5 bis 6,5 | 2,0 bis 6,0 | Gew.-% | |
| Partikeldurchmesser $d_{50}$ des weiteren Pigmentsystems | 2,0 bis 10,0 | 2,4 bis 8,0 | 2,6 bis 7,0 | $\mu$m | wie beschrieben |
| UV-Stabilisator | 0,1 bis 5,0 | 0,2 bis 4,5 | 0,3 bis 4,0 | Gew.-% | |
| Deckschicht A (matt-weiße Deckschicht) | | | | | |
| Konzentration an Weißpigment | 2,0 bis 15,0 | 3,0 bis 14,0 | 4,0 bis 13,0 | Gew.-% | |
| Füllstoffkonzentration des zusätzlichen Partikels | 1,0 bis 7,0 | 1,5 bis 6,5 | 2,0 bis 6,0 | Gew.-% | |
| UV-Stabilisator | 0,3 bis 8,0 | 0,5 bis 3,0 | 1,0 bis 2,0 | Gew.-% | |
| Partikeldurchmesser $d_{50}$ des weiteren Pigmentsystems | 2,0 bis 10,0 | 2,4 bis 8,0 | 2,6 bis 7,0 | $\mu$m | wie beschrieben |
| Dicke der Deckschicht A | 2,0 bis 15,0 | 3,0 bis 8,0 | 3,5 bis 5,0 | $\mu$m | |

(fortgesetzt)

| Eigenschaften der Folie | | | | | |
|---|---|---|---|---|---|
| | bevorzugter Bereich | besonders bevorzugt | ganz besonders bevorzugt | Einheit | Messmethode |
| Dicke der Folie | 15 bis 100 | 16 bis 40 | 19 bis 38 | $\mu$m | |
| Weißgrad der Folie nach Berger | >75 | >80 | >85 | | s. Beschreibung |
| Transparenz der Folie | <60 | <50 | <40 | % | ASTM-D 1003-00 |
| Glanz der Deckschicht A bei 60° vor Bewitterungstest | <50 | <45 | <40 | | DIN 67530 |
| Reibungswert COF A-Seite gegen A-Seite | < 0,50 | < 0,45 | < 0,40 | | DIN 53375 |
| Topographie A-Seite | > 100, < 1500 | > 150, < 1250 | > 200, < 1000 | Erhebungen pro mm$^2$ > 1,5 $\mu$m | wie beschrieben |
| Mittlere Rauigkeit $R_a$ der matt-weißen A-Seite | 100 bis 1000 | 175 bis 950 | 200 bis 900 | nm | DIN 4768 |

Zur Charakterisierung der Rohstoffe und der Folien wurden die folgenden Messmethoden benutzt:

DIN = Deutsches Institut für Normung
ASTM = American Society for Testing and Materials

**Relative Viskosität (RV-Wert), Standardviskosität (SV-Wert) Umrechnung SV in RV**

Die Standardviskosität SV wird - angelehnt an DIN 53726 - durch die Messung der relativen Viskosität $\eta_{rel.}$ einer 1 Gew.-%-igen Polymerlösung in Dichloressigsäure (DCE) in einem Ubbelohde Viskosimeter bei 25° C gemessen. Aus der relativen Viskosität $\eta_{rel.}$ wird der dimensionslose SV-Wert wie folgt ermittelt:

$$SV = (\eta_{rel.} - 1) \cdot 1000$$

Folie bzw. Polymerrohstoffe werden dazu in DCE gelöst und die Weißpigmente und Partikel vor der Messung abzentrifugiert. Der Anteil an Pigmenten wird mittels Aschebestimmung ermittelt und durch entsprechende Mehreinwaage an Folie (um zu der o. g. 1 Gew.-%igen Lösung zu gelangen) korrigiert. D.h.:

$$\text{Einwaage} = (\text{Einwaagemenge laut Vorschrift}) / ((100 - \text{Partikelgehalt in \%})/100)$$

Die intrinsische Viskosität (IV) berechnet sich wie folgt aus der Standardviskosität:

$$IV = [\eta] = 6{,}907 * 10^{-4}\ SV\ (DCE) + 0{,}063096\ [dl/g]$$

**Bewitterung (angelehnt an DIN EN ISO 4892-3:2006):**

Gerät: QUV/spray von Q-panel (UV fluorescence lamp)
Test Zyklus:

a. 4 h UVA Bestrahlung bei 60 °C (black panel temperature)
b. 5 min Wasser Spray während der Bewitterung
c. 4 h Kondensation bei 50 °C
d. zurück zu a

Bestrahlungsintensität = 0.89 W/m$^2$ bei 340 nm (UV-A)

Die bewitterte Folie wird vor der Glanzmessung unter leichtem Druck und Abreiben mit einem feuchten Papiertuch von oberflächlich anhaftendem Oligomer und anderem Material gereinigt.

**Glanz**

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 60° eingestellt. Ein Lichtstrahl trifft unter dem eingestellten Einstrahlwinkel auf die ebene Prüffläche (Folie) und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Weißgrad**

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ELREPHO der Firma Zeiss, Oberkochem (DE), Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hansl Loos, Farbmessung, Verlag Beruf und Schule, Itzehoe (1989) beschrieben.

**Messung des mittleren Durchmessers d$_{50}$ (mittlerer Partikeldurchmesser)**

Die Bestimmung des mittleren Durchmessers d$_{50}$ wird auf einem Master Sizer der Firma Malvern Instruments, GB, mittels Laserscannung durchgeführt [andere Messgeräte sind z. B. Horiba LA 500 (Horiba Europe GmbH, DE) oder Helos (Sympathec, DE), welche das gleiche Messprinzip verwenden)]. Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch den Medianwert d$_{50}$ (= Lagemaß für den Mittelwert) gekennzeichnet. Der Messvorgang ist automatisch und beinhaltet auch die mathematische Bestimmung des d$_{50}$-Wertes. Der d$_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten d$_{50}$-Wert (auch Median genannt).

**Transparenz**

Die Transparenz wird mit dem Hazegard-plus Gerät der Firma Byk-Gardner, USA, nach ASTM D 1003-00 gemessen.

**Kontaktwinkel mit Wasser**

Die Polarität der Oberfläche wird durch eine Randwinkelmessung von destilliertem Wasser bestimmt. Die Messung findet bei 23 °C und 50 % r. F. statt. Mittels einer Dosierspritze wird ein 1 bis 2 mm breiter Tropfen destilliertes Wasser auf die Folienoberfläche aufgebracht. Da die Messung bedingt durch Wärmezufuhr der Beleuchtung (Verdunstung), Aufladung oder Spreizverhalten zeitabhängig ist, verbleibt die Nadel in dem Tropfen, so dass der Tropfen während der Messung vorsichtig vergrößert und dann sofort mittels eines Goniometerokulars der Kontaktwinkel abgelesen wird (Messung des Fortschreitwinkels). Aus 5 Messungen wird der Mittelwert gebildet.

Im Folgenden wird die Erfindung anhand von Beispielen näher erläutert.

**Beispiel 1**

Die Rohstoffe für die Basischicht (B) wurden getrocknet und dem Extruder für die Basisschicht (B) zugeführt. Ebenso wurden die Rohstoffe für die Deckschicht (A) getrocknet und dem Extruder für die Deckschicht (A) zugeführt.

Dann wurde durch Coextrusion und anschließende stufenweise Orientierung in Längs- und Querrichtung eine weiße zweischichtige Folie mit AB-Aufbau und einer Gesamtdicke von 36 $\mu$m hergestellt. Die Dicke der Deckschicht (A) betrug 5 $\mu$m.

Basisschicht (B):

| | |
|---|---|
| 63 Gew.-% | Polyethylenterephthalat mit einem SV-Wert von 800 |
| 12 Gew.-% | Masterbatch der Fa. Sukano (Schindellegi, CH) mit 50 Gew.-% Rutil-Titandioxid R104, Fa. DuPont, (mittlerer Teilchendurchmesser Titandioxid ca. 0,3 $\mu$m) und 50 Gew.-% Polyethylenterephthalat mit einem SV-Wert von 800 |
| 20 Gew.-% | Masterbatch der Fa. Advansa, Türkei, mit 1,5 Gew.-% Sylobloc® 44H (SiO$_2$, d$_{50}$ = 2,5 $\mu$m) der Fa. Grace, Deutschland, und 98,5 Gew.-% Polyethylenterephthalat mit einem SV-Wert von 800 |
| 5 Gew.-% | Masterbatch der Fa. Sukano (Schindellegi, CH) mit 20 Gew.-% UV-Stabilisator Tinnuvin 1577 der Firma BASF, Schweiz, SV-Wert 750 und 80 Gew.-% Polyethylenterephthalat mit einem SV-Wert von 800 |

Deckschicht (A), Mischung aus:

| | |
|---|---|
| 14 Gew.-% | Masterbatch der Fa. Sukano (Schindellegi, CH) mit 50 Gew.-% Rutil-Titandioxid (d$_{50}$ ca. 0,3 $\mu$m) und 50 Gew.-% Polyethylenterephthalat mit einem SV-Wert von 800 |
| 56 Gew.-% | Copolyesterrohstoff mit einem SV-Wert von 800, bestehend aus 95 Gew.-% Copolyester aus 78 Mol-% Terephthalsäure, 22 Mol-% Isophthalsäure und 100 Mol-% Ethylenglykol und 5,0 Gew.-% SiO$_2$-Partikel (Sylysia 430 von der Fa. Fuji, JP) mit einem d$_{50}$-Wert von 3,4 $\mu$m |
| 20 Gew.-% | Copolyesterrohstoff mit einem SV-Wert von 800, bestehend aus 95 Gew.-% Copolyester aus 99 Mol-% Terephthalsäure, 1 Mol-% Isophthalsäure und 100 Mol-% Ethylenglykol und 5 Gew.-% SiO$_2$-Partikel (Sylysia 430 von der Fa. Fuji, JP) mit einem d$_{50}$-Wert von 3,4 $\mu$m. |
| 10 Gew.-% | Masterbatch der Fa. Sukano (Schindellegi, CH) mit einem SV-Wert von 750 mit 80 Gew.-% Polyethylenterephthalat mit einem SV-Wert von 800, 20 Gew.-% UV-Stabilisator Tinnuvin 1577 der Firma BASF, Schweiz |

Die Herstellungsbedingungen in den einzelnen Verfahrensschritten waren:

| | | | | |
|---|---|---|---|---|
| Extrusion | Temperaturen | A-Schicht: | 280 | °C |
| | | B-Schicht: | 280 | °C |
| | | C-Schicht: | 280 | °C |
| | Temperatur der Abzugswalze | | 20 | °C |
| Längsstreckung | Temperatur (T-Anfang bis T-Ende) | | 70-120 | °C |
| | Längsstreckverhältnis | | 3,2 | |
| Querstreckung | Temperatur (T-Anfang bis T-Ende) | | 80-135 | °C |
| | Querstreckverhältnis | | 3,8 | |
| Fixierung | Temperatur | | 230 | °C |
| | Dauer | | 3 | s |

Es wurde eine Folie mit hoher UV-Stabilität, einem hohen Mattgrad, mit sehr gutem Wickelverhalten, einer sehr guten Wickelqualität und einem sehr guten Verarbeitungsverhalten erhalten.

**Beispiel 2**

Die Folie wurde wie in Beispiel 1 hergestellt. Ein Latex mit 4,5 Gew.-% Feststoffgehalt, bestehend aus einem Copolymeren aus

60 Gew.-% Methylmethacrylat,
35 Gew.-% Ethylacrylat und
5 Gew.-% N-Methylolacrylamid

und einem Tensid, Rest Wasser, wurde nach dem folgenden Verfahren als Haftvermittlerbeschichtung auf die A-Schicht der Polyesterfolie aufgebracht:

Die längsgestreckte Folie wurde coronabehandelt (8 kW/m$^2$) und danach durch Reversgravurbeschichtung auf der weiß-matten A-Schicht mit dem oben beschriebenen Latex beschichtet.

Die biaxial gestreckte Folie wurde bei 230 °C thermofixiert. Das Trockengewicht der Beschichtung betrug ca. 0,035 g/m$^2$ bei einer Beschichtungsdicke (nach dem Trocknen) von etwa 40 nm.

Der Kontaktwinkel der A-Schichtoberfläche zu Wasser betrug 67,5°. Die Folie wurde auf ihre reprografische Haftung geprüft und ergab eine gute Haftung.

**Vergleichsbeispiel 1**

Das Beispiel 1 aus der EP-A-1 900 515 wurde nachgestellt. Der Glanz, gemessen bei einem Einfallswinkel von 60°, stieg nach dem Bewitterungstest von 26 auf 61 an. Die Folie erfüllte damit nicht die Kriterien für eine Anwendung im Außenbereich von Gebäuden.

**Vergleichsbeispiel 2**

Das Beispiel 1 b aus der EP-A-1 900 515 A1 wurde nachgestellt. Der Glanz, gemessen bei einem Einfallswinkel von 60°, stieg nach dem Bewitterungstest von 27 auf 56 an. Die Folie erfüllte damit nicht die Kriterien für eine Anwendung im Außenbereich von

Gebäuden.

Die Ergebnisse der Beispiele/Vergleichsbeispiele sind in Tabelle 2 zusammengefasst.

**Tabelle 2**

| | Weißgrad der Folie | Transparenz [%] | Glanz (60°) A-Seite (= weißmatte Seite) vor Bewitterungstest | Glanz (60°) A-Seite (= weißmatte Seite) nach Bewitterungstest | Reibungswert COF A-Seite gegen A-Seite | Kontaktwinkel [°] |
|---|---|---|---|---|---|---|
| **Beispiel 1** | 92 | 30 | 10 | 11 | 0,34 | - |
| **Beispiel 2** | 92 | 30 | 11 | 11 | 0,34 | 67,5 |
| | | | | | | |
| **Vergleichsbeispiel 1** | 93 | 30 | 26 | 61 | 0,32 | - |
| **Vergleichsbeispiel 2** | 93 | 30 | 27 | 56 | 0,32 | 63,9 |

**Patentansprüche**

1. Weiße, biaxial orientierte Polyesterfolie mit mindestens einer weißen, matten Basisschicht B, die Weißpigment enthält, und mindestens einer weißen, matten Deckschicht A, die ebenfalls Weißpigment enthält und neben dem Weißpigment weitere, den Mattgrad erhöhende, von dem Weißpigment verschiedene Partikel enthält, **dadurch gekennzeichnet, dass** sowohl die Deckschicht A als auch die Basisschicht B neben dem Weißpigment weitere, den Mattgrad erhöhende, von dem Weißpigment verschiedene Partikel enthalten, die einen mittleren Partikeldurchmesser $d_{50}$ - gemessen mittels Laserscannung -_von 2 bis 10 $\mu$m aufweisen und die in jeder der Schichten A und B in einer Konzentration von 1,0 bis 7,0 Gew.-% enthalten sind, wobei der Partikeldurchmesser und die Konzentration in beiden Schichten gleich oder verschieden ist und wobei das Weißpigment in der Deckschicht A in einer Konzentration von 2,0 bis 15,0 Gew.-% und in der Bäsisschicht B in einer Konzentration von 3 bis 15 Gew.-% enthalten ist und wobei die Deckschicht A einen UV-Stabilisator in einer Konzentration von 0,3 bis 8,0 Gew.-% enthält, wobei der Anteil der Basisschicht B an der Gesamtdicke der Folie mindestens 50 % beträgt und die Folie einen Mattgrad ausgedrückt als Glanz von < 50 bei 60° nach DIN 67 530 sowie einen Weißgrad von > 75 nach Berger aufweist, wobei sich alle Gewichtsprozentangaben auf die Masse der Schicht, für die diese Angabe gemacht wird, beziehen.

2. Weiße, biaxial orientierte Polyesterfolie nach Anspruch 1, **dadurch gekennzeichnet, dass** sie dreischichtig ist.

3. Weiße, biaxial orientierte Polyesterfolie nach einem der Ansprüche 1 oder 2, **dadurch gekennzeichnet, dass** der Polymeranteil der Basisschicht B der Folie zu mindestens 80 Gew.-% aus thermoplastischem Polyester besteht, wobei diese Gewichtsprozentangabe sich auf den Polymeranteil der Schicht bezieht, Pigment-, Partikel- oder Additivanteile sind dabei nicht berücksichtigt.

4. Weiße, biaxial orientierte Polyesterfolie nach Anspruch 3, **dadurch gekennzeichnet, dass** der thermoplastische Polyester zu mindestens 90 Mol-% aus von Ethylenglykol und Terephthalsäure abgeleiteten Einheiten oder aus von Ethylenglykol und Naphthalin-2,6-dicarbonsäure abgeleiteten Einheiten besteht - die 100 Mol-%-Basis bildet hierbei der Polyester -, wobei bevorzugt der thermoplastische Polyester Polyethylenterephthalat-Homopolymer ist.

5. Weiße, biaxial orientierte Polyesterfolie nach einem der Ansprüche 1 bis 4, **dadurch gekennzeichnet, dass** der Polyester der Deckschicht 4 bis 30 Mol-% von Isophthalsäure abgeleitete Einheiten enthält, wobei diese Molprozentangabe auf die Gesamtheit - = 100 Mol-% - der von Dicarbonsäure abgeleiteten Einheiten des Polyesters in dieser Schicht bezogen ist.

6. Weiße, biaxial orientierte Polyesterfolie nach einem der Ansprüche 1 bis 5, **dadurch gekennzeichnet, dass** das Weißpigment Titandioxid, Bariumsulfat, Zinksulfid, Zinkoxid oder eine Mischung aus einem oder mehreren dieser Weißpigmente ist.

7. Weiße, biaxial orientierte Polyesterfolie nach Anspruch 6, **dadurch gekennzeichnet, dass** das $TiO_2$ vom Rutil-Typ ist.

8. Weiße, biaxial orientierte Polyesterfolie nach einem oder mehreren der Ansprüche 1 bis 7, **dadurch gekennzeichnet, dass** die Gesamtweißpigmentmenge in der Polyesterfolie berechnet worden ist nach der Formel:

$$\text{Gesamtweißpigmentmenge [Gew.-\%]} = a \cdot x^2 - b \cdot x + c$$

wobei

x die Gesamtfoliendicke in $\mu$m,
a 0,001-0,002 [Gew.-%·$\mu$m$^{-2}$],
b 0,25-0,37 [Gew.-%·$\mu$m$^{-1}$] und
c 15-22 [Gew.-%]

sind.

9. Weiße, biaxial orientierte Polyesterfolie nach einem der Ansprüche 1 bis 8, **dadurch gekennzeichnet, dass** die von den Weißpigmenten verschiedenen Partikel ausgewählt werden aus: Calciumcarbonat, Kieselsäure, Talk, Magnesiumcarbonat, Bariumcarbonat, Calciumsulfat, Lithiumphosphat, Calciumphosphat, Magnesiumphosphat, Aluminiumoxid, Lithiumfluorid, Calcium-, Barium-, Zink- oder Mangan-Salzen der eingesetzten Dicarbonsäuren, Kaolin oder vernetzten Polymerpartikeln, oder beliebigen Mischungen derselben.

10. Weiße, biaxial orientierte Polyesterfolie nach einem der Ansprüche 1 bis 9, **dadurch gekennzeichnet, dass** der UV-Stabilisator ein UV-Stabilisator auf Triazinbasis ist.

11. Weiße, biaxial orientierte Polyesterfolie nach einem der Ansprüche 1 bis 10, **dadurch gekennzeichnet, dass** der Weißgrad > 80 und die Transparenz <60% nach ASTM D 1003-61 beträgt.

12. Weiße, biaxial orientierte Polyesterfolie nach einem der Ansprüche 1 bis 11, **dadurch gekennzeichnet, dass** die Dickenerosion der Folie nach 5000 h Bewitterung - angelehnt an DIN EN ISO 4892-3:2006 - unter 5 $\mu$m Dickenverlust liegt.

13. Verfahren zur Herstellung einer Polyesterfolie nach Anspruch 1, wobei die den einzelnen Schichten der Folie entsprechenden Schmelzen durch eine Flachdüse coextrudiert und zu einem Schmelzefilm ausgeformt werden, die so erhaltene Folie zur Verfestigung auf einer oder mehreren Walze/n abgezogen wird, die Folie anschließend biaxial gestreckt - orientiert -, gegebenenfalls vor oder während einer Streckung beschichtet, die biaxial gestreckte Folie thermofixiert und gegebenenfalls an der zur Behandlung vorgesehenen Oberflächenschicht corona- oder flammbehandelt und anschließend aufgerollt wird.

14. Verwendung einer Polyesterfolie nach einem der Ansprüche 1 bis 12 in Gebäudeverkleidungen oder in Baukonstrukten, insbesondere in der Außenanwendung, insbesondere für Dachkonstruktionen.

**Claims**

1. A white, biaxially oriented polyester film having at least a white, matt base layer B containing white pigment, and at least one white, matt outer layer A, which also contains a white pigment, and in addition to the white pigment containing further the degree of mattness increasing particles different to the white pigment, **characterized in that** both the outer layer A and the base layer B contain further the degree of mattness increasing particles different to the white pigment, which have an average particle diameter $d_{50}$ - measured by using laser scanning - from 2 to 10 $\mu$m and which are present in each of the layers A and B at a concentration of 1.0 to 7.0 wt.-%, wherein the particle diameter and the concentration in both layers are equal or different and wherein the white pigment is present in the outer layer A at a concentration of 2.0 to 15.0 wt.-% and in the base layer B at a concentration of 3 to 15 wt.-% and wherein the outer layer A contains a UV-stabilizer at a concentration of 0.3 to 8.0 wt.-%, wherein the proportion of the base layer B of the total thickness of the film is at least 50 % and the film has a degree of mattness expressed in shininess of > 75 at 60° according to DIN 67 530 and a degree of whiteness of > 75 after Berger, wherein all weight percentages are based on the mass of the layer the specification is made for.

2. A white, biaxially oriented polyester film according to claim 1, **characterized in that** it has three layers.

3. A white, biaxially oriented polyester film according to one of claims 1 or 2, **characterized in that** the polymer content of the base layer B of the film comprises at least 80 wt.-% of thermoplastic polyester, said weight percentage being based on the polymer content of the layer, pigment-, particle or additive parts are not considered.

4. A white, biaxially oriented polyester film according to claim 3, **characterized in that** the thermoplastic polyester comprises at least 90 mol% of units derived from ethylene glycol and terephthalic acid or from ethylene glycol and units derived from naphthalene-2,6-dicarboxylic acid - 100 mol% here forms the basis polyester - wherein the thermoplastic polyester is preferably polyethylene terephthalate homopolymer.

5. A white, biaxially oriented polyester film according to one of claims 1 to 4, **characterized in that** the polyester of the top layer 4 contains up to 30 mol% of units derived from isophthalic acid, wherein said mol percentage is based on the total - = 100 mol% - of the units derived from dicarboxylic acid of the polyester in this layer.

6. A white, biaxially oriented polyester film according to one of claims 1 to 5, **characterized in that** the white pigment is titanium dioxide, barium sulfate, zinc sulfide, zinc oxide or a mixture of one or more of these white pigments.

7. A white, biaxially oriented polyester film according to claim 6, **characterized in that** the $TiO_2$ is rutile type.

8. A white, biaxially oriented polyester film according to one or more of claims 1 to 7, **characterized in that** the total amount of white pigment in the polyester film has been calculated according to the formula:

$$\text{Total amount of white pigment [wt.-\%]} = a \cdot x^2 - b \cdot x + c$$

In which

x is the total film thickness in $\mu$m,
a is 0.001-0.002 [wt.-%$\cdot \mu m^{-2}$],
b is 0.25-0.37 [wt.-%$\cdot \mu m^{-1}$] and
c is 15-22 [wt.-%].

9. A white, biaxially oriented polyester film according to one of claims 1 to 8, **characterized in that** the pigments different to the white pigment particles are selected from calcium carbonate, silica, talc, magnesium carbonate, barium carbonate, calcium sulfate, lithium phosphate, calcium phosphate, magnesium phosphate, aluminum oxide, lithium fluoride, calcium, barium, zinc or manganese salts of the dicarboxylic acids, kaolin or crosslinked polymer particles used, or any mixtures thereof.

10. A white, biaxially oriented polyester film according to one of claims 1 to 9, **characterized in that** the UV stabilizer is a triazine-based UV stabilizer.

11. A white, biaxially oriented polyester film according to one of claims 1 to 10, **characterized in that** the degree of whiteness is > 75, and the transparency according to ASTM D 1003-61 is < 60%.

12. A white, biaxially oriented polyester film according to one of claims 1 to 11, **characterized in that** the thickness erosion of the film is under 5 $\mu$m thickness loss after 5000 h weathering based on DIN EN ISO 4892-3:2006.

13. A process for producing a polyester film according to claim 1, wherein the corresponding melts of the individual film layers are coextruded through a flat die and formed into a melt film, which resultant film for solidification on one or more rolls is drawn off, the film is then biaxially stretched - oriented -, optionally coared before or during a stretching, heat-setting the biaxially stretched film and, where appropriate, corona- or flame-treated at the intended treatment surface layer and is then rolled up.

14. Use of a polyester film according to one of claims 1 to 12 in building panels or in building structures, particularly in outdoor applications, in particular for roof structures.

**Revendications**

1. Feuille de polyester blanche, orientée de manière biaxiale avec au moins une couche de base B mate blanche, qui contient du pigment blanc, et au moins une couche de recouvrement A mate blanche qui contient également du pigment blanc et en plus du pigment blanc d'autres particules différentes du pigment blanc augmentant le degré de matage, **caractérisée en ce que** la couche de recouvrement A tout comme la couche de base B contiennent en plus du pigment blanc, d'autres particules différentes du pigment blanc augmentant le degré de matage, qui présentent un diamètre de particules moyen $d_{50}$ - mesuré par balayage laser - de 2 à 10 $\mu$m et qui sont contenues dans chacune des couches A et B à une concentration de 1,0 à 7,0% en poids, dans lequel le diamètre des particules et la concentration dans les deux couches sont identiques ou différents et dans lequel le pigment blanc est contenu dans la couche de recouvrement A à une concentration de 2,0 à 15,0% en poids et dans la couche de base B à une concentration de 3 à 15% en poids et dans lequel la couche de recouvrement A contient un stabilisateur UV à une concentration de 0,3 à 8,0% en poids, dans lequel la part de la couche de base B par rapport à l'épaisseur totale de la feuille est d'au moins 50% et la feuille présente un degré de matage exprimé par la brillance < 50 à 60° selon DIN 67 530 ainsi qu'un degré de blanc > 75 selon Berger, dans lequel toutes les indications en pourcentage en poids se rapportent à la masse de la couche pour laquelle cette indication est faite.

**2.** Feuille de polyester blanche, orientée de manière biaxiale selon la revendication 1, **caractérisée en ce qu'**elle est formée de trois couches.

**3.** Feuille de polyester blanche, orientée de manière biaxiale selon l'une quelconque des revendications 1 ou 2, **caractérisée en ce que** la part de polymère de la couche de base B de la feuille se compose à au moins 80% en poids de polyester thermoplastique, dans lequel l'indication en pourcentage en poids se rapporte à la part de polymère de la couche, les parts de pigments, particules ou additifs n'étant pas prises en compte.

**4.** Feuille de polyester blanche, orientée de manière biaxiale selon la revendication 3, **caractérisée en ce que** le polyester thermoplastique se compose à au moins 90% en mol d'unités dérivées de l'éthylène glycol et de l'acide téréphtalique ou d'unités dérivées de l'éthylène glycol et de l'acide dicarboxylique de naphtalène 2,6, le polyester forme ce faisant 100% en mol de la base, le polyester thermoplastique étant de préférence l'homopolymère de polytéréphtalate d'éthylène.

**5.** Feuille de polyester blanche, orientée de manière biaxiale selon l'une quelconque des revendications 1 à 4, **caractérisée en ce que** le polyester de la couche de recouvrement contient 4 à 30% en mol d'unités dérivées de l'acide d'isophtalique, dans lequel cette indication de pourcentage en mol se rapporte à l'ensemble - = 100% en mol - des unités de polyester dérivées de l'acide dicarboxylique dans cette couche.

**6.** Feuille de polyester blanche, orientée de manière biaxiale selon l'une quelconque des revendications 1 à 5, **caractérisée en ce que** le pigment blanc est du dioxyde de titane, du sulfate de baryum, du sulfure de zinc, de l'oxyde de zinc ou un mélange d'un ou de plusieurs de ces pigments blancs.

**7.** Feuille de polyester blanche, orientée de manière biaxiale selon la revendication 6, **caractérisée en ce que** le $TiO_2$ est de type rutile.

**8.** Feuille de polyester blanche, orientée de manière biaxiale selon une ou plusieurs des revendications 1 à 7, **caractérisée en ce que** la quantité totale de pigment blanc dans la feuille de polyester a été calculée selon la formule :

$$\text{quantité totale de pigment blanc [\% en poids]} = a \cdot x^2 - b \cdot x + c$$

avec

x l'épaisseur totale de la feuille en $\mu$m,
a 0,001-0,002 [% en poids· $\mu m^{-2}$],
b 0,25-0,37 [% en poids· $\mu m^{-1}$] et
c 15-22 [% en poids].

**9.** Feuille de polyester blanche, orientée de manière biaxiale selon l'une quelconque des revendications 1 à 8, **caractérisée en ce que** les particules différentes des pigments blancs sont choisies parmi les suivantes : carbonate de calcium, acide silicique, talc, carbonate de magnésium, carbonate de baryum, sulfate de calcium, phosphate de lithium, phosphate de calcium, phosphate de magnésium, oxyde d'aluminium, fluorure de lithium, sels de calcium, de baryum, de zinc ou de manganèse des acides dicarboxyliques utilisés, kaolin ou particules de polymères réticulées ou des mélanges quelconques de celles-ci.

**10.** Feuille de polyester blanche, orientée de manière biaxiale selon l'une quelconque des revendications 1 à 9, **caractérisée en ce que** le stabilisateur UV est un stabilisateur UV à base de triazine.

**11.** Feuille de polyester blanche, orientée de manière biaxiale selon l'une quelconque des revendications 1 à 10, **caractérisée en ce que** le degré de blanc est > 80 et la transparence < 60% selon ASTM D 1003-61.

**12.** Feuille de polyester blanche, orientée de manière biaxiale selon l'une quelconque des revendications 1 à 11, **caractérisée en ce que** l'érosion de l'épaisseur de la feuille après 5000 h d'exposition aux intempéries - basé sur DIN EN ISO 4892-3 :2006 - est inférieure à 5 $\mu$m de perte d'épaisseur.

**13.** Procédé de fabrication d'une feuille de polyester selon la revendication 1, dans lequel les masses fondues correspondant aux différentes couches de la feuille sont coextrudées par une buse plate et formées en un film fondu, la feuille ainsi obtenue est tirée pour la solidification sur un ou plusieurs rouleau/x, la feuille est ensuite revêtue étirée - orientée - de manière biaxale, le cas échéant avant ou pendant un étirage, la feuille étirée de manière biaxiale est thermofixée et le cas échéant traitée corona ou à la flamme au niveau de la couche superficielle prévue pour le traitement puis enroulée.

**14.** Utilisation d'une feuille de polyester selon l'une quelconque des revendications 1 à 12 dans les revêtements de bâtiments ou dans les constructions, en particulier pour l'application extérieure, en particulier pour les constructions de toiture.

**IN DER BESCHREIBUNG AUFGEFÜHRTE DOKUMENTE**

**In der Beschreibung aufgeführte Patentdokumente**

- US PS3154461 A
- EP 1900515 A1
- FR 2812299
- DE 102006059888 A1
- EP 0144948 A
- EP 0144878 A
- US 4252885 A
- EP 0296620 A
- EP 1900515 A

**In der Beschreibung aufgeführte Nicht-Patentliteratur**

- **HANSL LOOS.** Farbmessung. Verlag Beruf und Schule, 1989